# EUROPEAN PATENT APPLICATION

(11) **EP 1 650 736 A1**
(43) Date of publication of application: **26.04.2006**
(21) Application number: 04447237.1
(22) Date of filing: 25.10.2004
(51) Int. Cl.: G09G 3/34

(54) **Backlight modulation for display**

(71) Applicant: Barco NV, 8500 Kortrijk (BE)
(72) Inventor: Kimpe, Tom, 9000 - Gent (BE)
(74) Representative: Bird, William Edward

(57) **Abstract**

A display 10 has a non pixel addressable backlight 130, having a temporal modulation applied, a pixel addressable LCD 120 in an optical path and the pixel addressable part being arranged to output each pixel of a frame as a temporal sequence of output values unrelated to colour components of the pixel, different values of the sequence coinciding with different output levels of the modulated non pixel addressable part.. The apparent luminance or colour of the pixels can be made to take intermediate values between the gradations dictated by the stepsize corresponding to a least significant bit of the pixel addressable part, to enable more accurate reproduction of both colour and greyscale images. Additional intermediate output levels are concentrated at low illumination levels. A convertor generates a temporal modulation of the pixels for the LCD according to a value of the pixels in an input signal, and synchronized to the temporal modulation of the backlight.

## Description

**Field of the invention**: The present invention relates to displays, to convertors for displays, and to methods of configuring such displays. Monochrome and colour displays, and emissive, transmissive, reflective and trans-reflective display technologies fulfilling the feature that each pixel or sub-pixel is individually addressable, can be used.

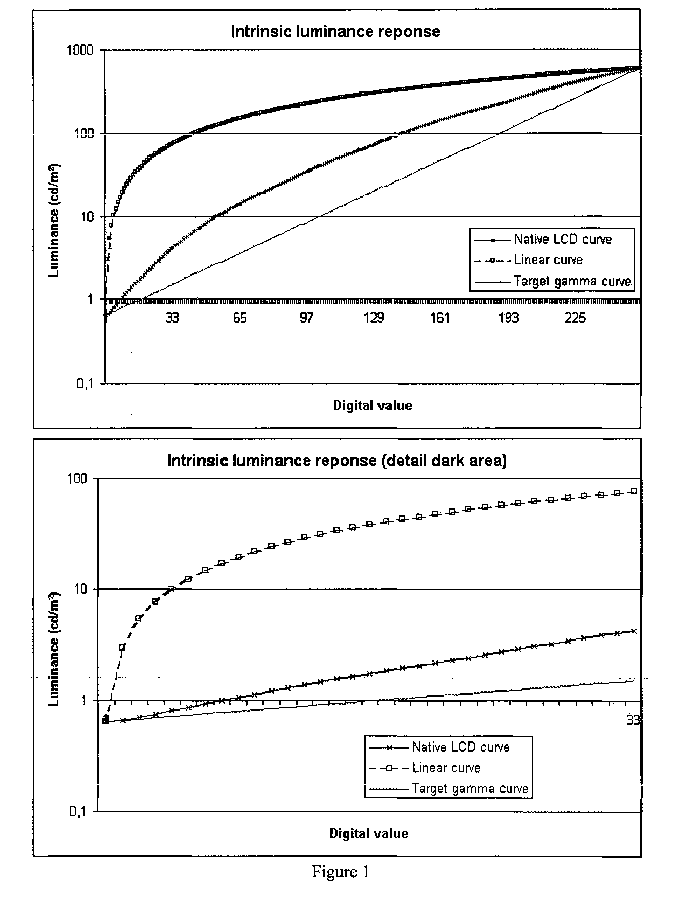

**Description of the Related Art**: At present, most matrix based display technologies are technologically immature compared to long established electronic image forming technologies such as Cathode Ray Tubes (CRT). As a result, some image quality deficiencies exist and cause problems for the acceptance of these technologies in certain applications, as will now be explained.
A first disadvantage of current matrix displays, such as but not limited to LCD displays and DMD/DLP (Digital Micromirror Devices/ Digital Light Processing: pixels are formed by very small controllable mirrors that can be electronically set to one of two positions: one position reflects light onto the display screen and another position makes sure that the light is absorbed. To create greyscales the mirrors are switched very quickly between the two positions, e.g. using pulse width modulation) projection displays, is that typically their native luminance curve strongly differs from the traditional gamma curve of the CRT displays. The human eye has a logarithmic relation between perceived intensity and actual measured luminance intensity of the light. Therefore very often gamma correction is used to change the native curve of a display device into a more or less logarithmic (gamma) curve. In other words: a constant number of useful greyscales per luminance decade is desirable.
Also other target luminance curves such as the DICOM GSDF exist. With current matrix displays the native curve often differs very much from the target luminance curve making it very difficult to retain a sufficient number of grey scale values after the gamma correction. For example, with present LCD displays it is very difficult to have sufficient detail in the darker video levels because the native curve of the LCD differs a lot from the traditional gamma curve at darker video levels. Typically the number of greyscales per luminance decade is much lower at low luminance than at high luminance. This problem is shown in figure 1: the luminance is plotted in function of the digital drive level. Note that the axis is logarithmic so the target gamma curve is linear in this plot. Figure 1 clearly shows that the LCD display has less grey scales in the darker area compared to the target curve. In case of a linear native curve (such as a DLP/DMD projector) the situation is even worse. See also the detail dark-area plot: if it is desired to show the 32 distinct grey levels of the target luminance curve then an increase in the number of available grey levels in the darker areas of the LCD display is needed. Indeed: in the luminance range of the detailed plot the LCD has only about 12 available grey scales whereas the target luminance curve has about 32 grey levels in the same luminance range.

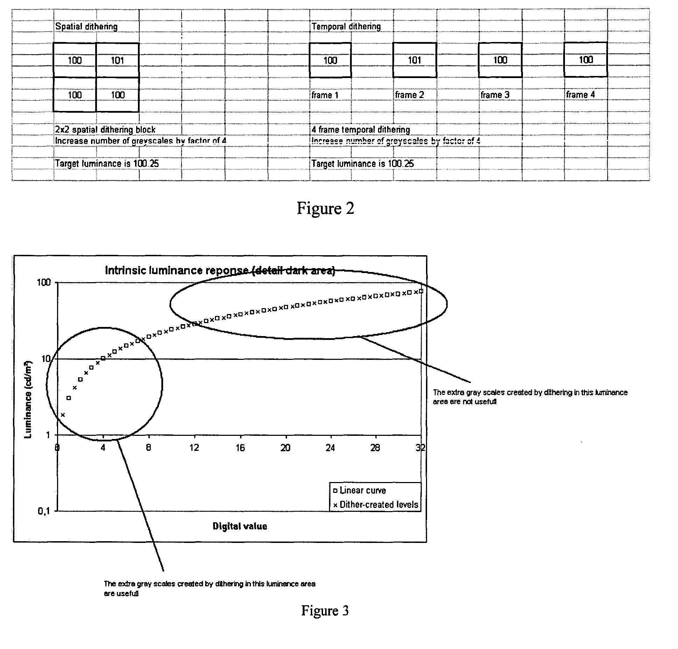

A commonly used technique is to use dithering on the display system to increase the output depth of the display. In general there are two dithering methods: spatial dithering and temporal dithering. Spatial dithering uses a halftone pattern to obtain more grey levels. The disadvantage here is that the effective resolution of the display system is reduced. Temporal dithering makes use of the fact that the human eye averages the perceived luminance over some time frame. Temporal dithering continuously changes the luminance intensity of individual pixels so that the average luminance over a certain timeframe is equal to the target luminance value. An important disadvantage of temporal dithering is that artefacts are introduced when displaying moving images. Especially when the dithering takes place over a large number of frames this becomes a severe problem. A frame can be the information contained in a frame buffer, i.e. the pixel values for a complete image. An example of spatial and temporal dithering is shown in figure 2. It is also possible to combine spatial and temporal dithering.

For both existing temporal and spatial dithering techniques the newly created greyscales are spread uniformly over the luminance range of the display system, i.e. the distance between the greyscales is a constant or there is a constant ratio. For example: in case of traditional two-frame temporal dithering all newly created greyscales will have luminance values which are the mean of the two surrounding existing or "native" greyscales of the display. This is a disadvantage because typically a lot more greyscales are needed in the lower luminance range while this is not a requirement in the higher luminance range (see figure 3). In practice, dither schemes are used so that in the critical luminance ranges, e.g. typically the dark luminance area, enough greyscales are available. Of course at the same time many non-useful greyscales are created in all other luminance areas and therefore a lot of created greyscales are effectively wasted. Note that the same problems are present in displaying colours on colour displays. In this case the problem is having enough luminance and colour tints typically at the lower luminance values.

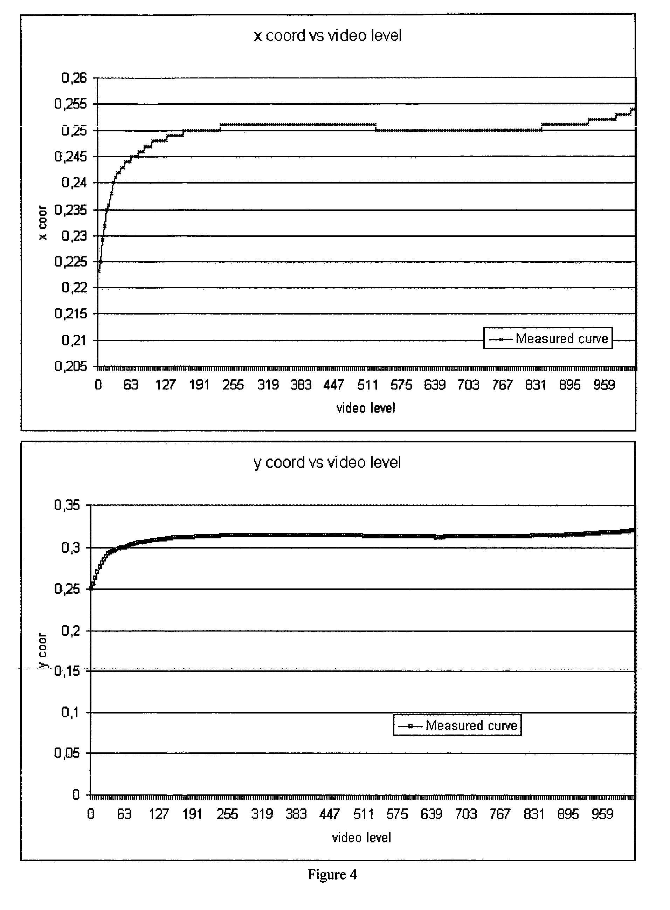

For some high-demanding applications such as medical imaging, greyscale display systems such as LCDs are used. One problem with these display systems is that although they are only capable of showing grey tones still there is an important colour difference between the individual grey levels. The most important cause is that the transmission spectrum of the liquid crystal cells is dependent on the driving level. This is illustrated in figure 4 where the (x, y)-chromaticity coordinates are plotted in function of the digital driving level and this for a greyscale LCD system. This difference in colour coordinates can easily be perceived by the user of the display and can both be disturbing and even have a negative impact on the performance. In medical imaging for instance, radiologists are used to looking at traditional film with a specific colour temperature. Research has shown that changing the colour temperature of the medical images has a negative impact on the accuracy of the diagnosis.

To make the colour temperature of a display system reproducible there exist solutions based on a colour adjustable backlight. In this case the colour of the backlight can be selected within certain limitations. This is achieved by using multiple primaries in the backlight and having each of the primary colours driven individually. The light from the multiple primaries is mixed. This technique is also called "whitepoint tuning" as until now it is common to set the whitepoint (i.e. maximum grey level or full white) of the display system to the correct colour point if a colour adjustable backlight is available.

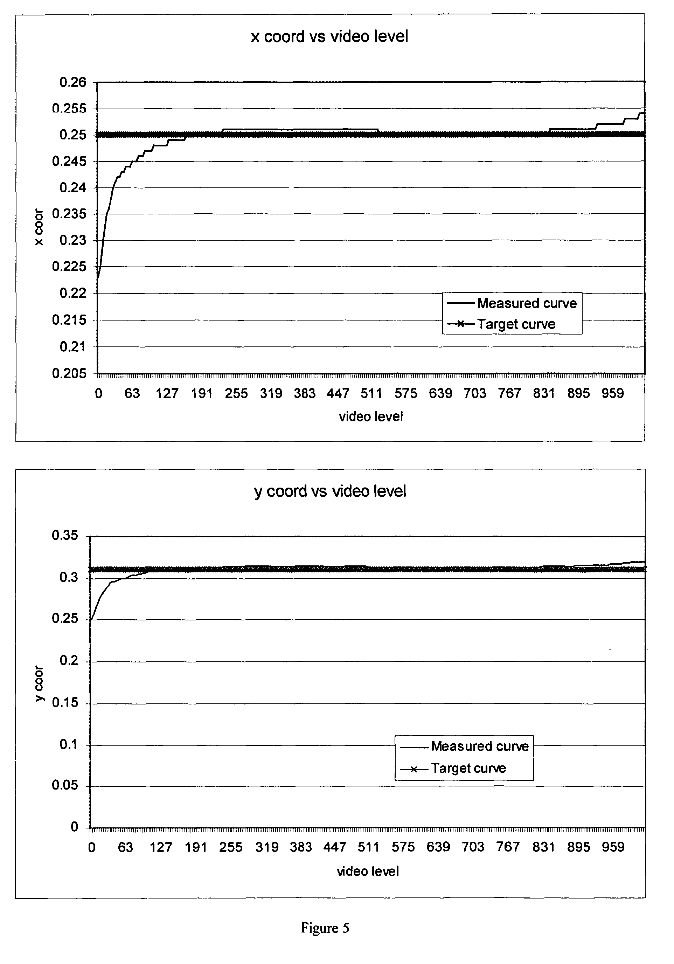

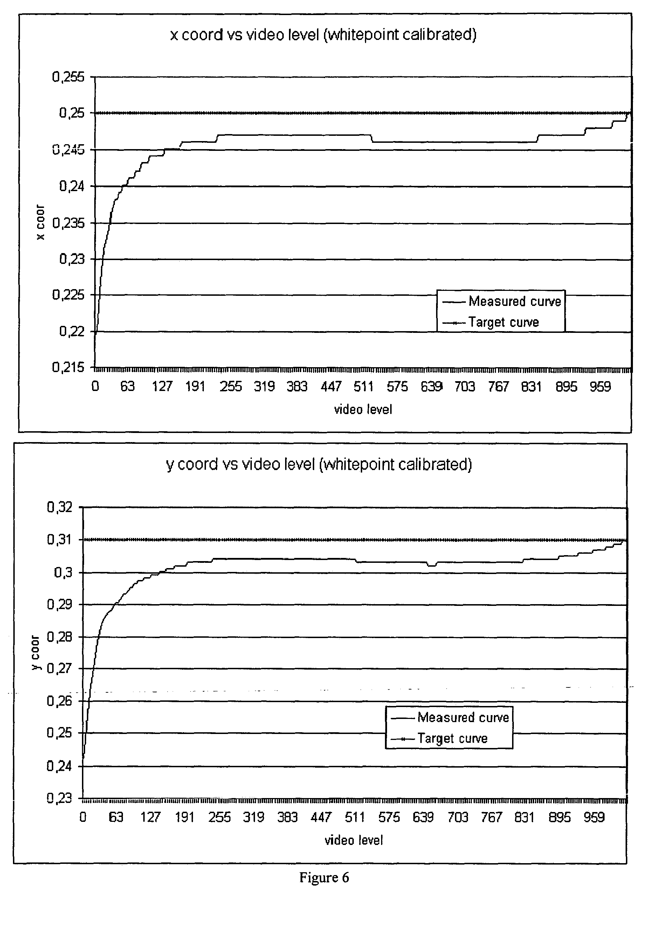

Figure 5 shows the native colour point in function of driving level and also the target or desired colour point in function of driving level. The plots in figure 6 show that "whitepoint tuning" is only a small part of the solution because the colour temperature of grey levels other than full white are still not correct because of the colour-shift of the monochrome LCD.

Another critical application area is colour imaging where display systems are expected to be compliant with some specific colour profile. This means that all digital driving values (e.g. R, G, B) or a subset of digital driving levels (R, G, B) of the display system need to correspond with well-defined (x, y) chromaticity coordinates. Of course also extra constraints on the luminance intensity are also possible and even desired. A commonly used method to fine-tune an LCD display system to a specific colour profile is to adjust the colour temperature of the backlight of the LCD. For example, the backlight can consist of red, green and blue CCFL (Cold Cathode Fluorescent Lamp: a high-efficient type of lamp that is very often used in display backlights) lamps or LEDs that can be adjusted individually so that it is possible to select a specific colour temperature. Typically the white point (i. e. red, green and blue all at maximum driving level) of the display system is set to match the desired colour profile. It is also possible to select (i.e. calibrate) the colour point for another specific video level of the display. This means that the (x, y) chromaticity coordinates will be equal to the desired colour coordinates when a fully white pixel is shown at the display system.
However, there is also a colour shift problem present with colour display systems.
Figure 4 shows an example of (x, y) chromaticity coordinates in function of driving level and this for a colour display system. This means that for instance digital driving level 128 corresponds to (R, G, B) values (128, 128, 128). In other words: the curves show the chromaticity shift when a neutral grey is shown at different luminance intensities. Because of the present colour shift the chromaticity coordinates (x, y) for the black point (R, G, B)= (0, 0, 0) will not be compliant to the desired colour profile. This uses the assumption that the desired colour profile has constant colour temperature for neutral grey as is usually desired. Until now the only available method to correct for the colour shift was by using lookup tables and thus changing the pixel data of the panel. For example: suppose that the black point has too much blue than the only method to correct for this was by increasing the amount green and red (e.g. by increasing the green and red digital driving level) until the colour point for the black point is correct. This is because it is not possible to decrease the amount of blue because the blue was already driven at minimum digital driving level zero. This method of correcting for colour shift exhibits several disadvantages.
A first disadvantage is the decrease of contrast ratio of the display system. Indeed, by increasing the digital driving level of some colours at the same time the luminance intensity is increased and therefore the contrast is reduced. The contrast of the display system is defined as the ratio between luminance intensity at full white and the luminance intensity at full black. This reduction in contrast can be very severe and typical values of a reduction can be between 5% and 50%. A second disadvantage is that the colour gamut of the display system is reduced because the lookup-tables will cause mixing of the display primaries instead of using the pure primaries and this for multiple (R, G, B) values. A third disadvantage is that the number of available colours is reduced. This is because the pixels are no longer necessarily driven between minimum and maximum driving value reducing the number of available (R, G, B) digital driving level combinations.
It is known from US patent application 2004113906 to reduce backlighting in displays for battery powered devices when displaying a low luminance image, in order to save battery power. It is also known to provide three colours of backlighting, e.g. red, green and blue for sequential fields of each frame, in order to produce a colour display. The luminance is an average of the values of the sequence.

### Summary of the Invention:

An object of the invention is to provide improved displays, convertors for displays, and methods of configuring such displays.

In one aspect the present invention provides a system and method for luminance and colour reproduction by using a two-level dither scheme in matrix addressed electronic display devices, especially fixed format displays such as plasma displays, field emission displays, liquid crystal displays, electroluminescent (EL) displays, light emitting diode (LED) and organic light emitting diode (OLED) displays, especially flat panel displays used in projection or direct viewing concepts. Monochrome and colour displays, and emissive, transmissive, reflective and trans-reflective display technologies fulfilling the feature that each pixel or sub-pixel is individually addressable, are included within the scope of the present invention.

### According to an aspect, the invention provides:

A display, e.g. a flat panel display or fixed format display, having a backlight or non-pixel addressable light output part and a pixel addressable light output part in an optical path, the backlight or non-pixel addressable part being arranged to have a temporal modulation, and the pixel addressable part being arranged to provide a native set of optical values for each pixel of the display, wherein the set of optical values is increased by the provision of intermediate optical values within the set by driving each pixel as a temporal sequence of output values, different values of the temporal sequence coinciding with different output levels of the modulated backlight or non-pixel addressable part, so that a perceivable optical output is a combination of the outputs of the two parts averaged over a duration of the temporal sequence. Preferably more intermediate optical values are provided for the darker optical values than for the light optical values. If the pixels have subpixels of different primary colours, e.g. at least two primary colours, the present invention includes forming a sequence of at least two of the primary colours per pixel to thereby average the colour over the temporal sequence. The present invention also includes modulating each primary in luminance on a frame by frame basis.

A further aspect of the present invention is to provide a display having a backlight or non-pixel addressable light output part and a pixel addressable light output part in an optical path, the backlight or non-pixel addressable part being arranged to have a temporal modulation, and the pixel addressable part being arranged to provide an optical value for each pixel of the display as a temporal sequence of output values unrelated to colour components of the optical value of the pixel, different values of the temporal sequence coinciding with different output levels of the modulated backlight or non-pixel addressable part, so that a perceivable optical output is a combination of the outputs of the two parts averaged over a duration of the temporal sequence.

By the averaging of a sequence of different combinations, the apparent luminance or colour of the pixels can be made to take intermediate values between the gradations dictated by the stepsize corresponding to a least significant bit of the control provided by the pixel addressable part. In other words the amount of apparent quantization can be increased in a selected part of the range. This can enable more accurate reproduction of both colour and greyscale images, or corrections can be made to non-linearities in the display output. The above technique can be used in combination with an amount of conventional spatial or temporal dither. In particular, for a given accuracy, the present invention can enable an amount of conventional spatial or temporal dither to be reduced, and so the abovementioned disadvantages of the conventional dithers can be reduced. In principle, the modulation of the backlight or non-pixel addressable part can be in phase or out of phase with, and need not be at the same frequency as, changes in optical values for pixels of the pixel addressable part. In principle either or both of the non-pixel and pixel parts can have an active light source or have a passive light modulator, such as a reflective or transmissive part, in any combination of passive and active parts. If both parts are passive, another light source can be used.
Unlike a known colour sequential LCD display, there is now freedom to choose the values of the sequence, as long as the average of the sequence of combinations is the desired value. In the colour sequential display, the output is the average of the temporal sequence of R and G and B values for a given pixel, combined with the fixed backlight R, G and B levels, but these R and G and B values of the sequence are dictated by the input signal pixel value.

An additional feature for a dependent claim is the backlight or non-pixel addressable part comprising a controllable light source, and the pixel addressable part comprising a reflective or transmissive layer. This can provide an additional advantage that at lower illumination levels, a grayscale stepsize is reduced, while at higher illumination levels, a stepsize is larger. Hence the additional intermediate output levels are concentrated at low illumination levels. This is where they are needed most, as explained above. Thus there are fewer wasted intermediate levels at higher illumination levels.
Another such additional feature is the backlight or non-pixel addressable part having a transmissive layer.
Another such feature is a convertor arranged to generate the temporal sequence for the pixel addressable part for each pixel according to an optical value for the pixels contained in an input signal, and synchronized to the temporal modulation of the backlight or non-pixel addressable part.
Another such feature is the device being arranged to modulate a colour point of the output of the back light or non-pixel addressable part. This can help compensate for displays which otherwise shift their colour point with luminance, for example.
Another such feature is the display being a colour sequential type, having a series of fields, and the sequence being applied for each field of the colour sequence.
Another such additional feature is a sensor to monitor a luminance or colour of the display, and dynamically alter the modulation or the temporal sequence according to the monitoring.
Another such additional feature is a spatial variation being applied by the backlight or non-pixel addressable part or by the pixel addressable part. This can be predetermined and fixed or can be alterable at least for the pixel addressable part. It can be used to compensate for inherent spatial variations of colour or luminance or contrast ratio across the display.
Another such feature is the values of the temporal sequence being chosen to remain within a limit on transition rate. This can help ease the rise or fall time specification for the pixel addressable part, or can enable a faster frame rate, to reduce flicker for example.
Another such feature is the modulation or the temporal sequence being scrambled. This can also help reduce flicker, particularly for longer modulation cycle times. This can encompass scrambling to change the sequence, or to increase frequency of peaks and troughs for example.
Another aspect provides a method of configuring a display having a backlight or non-pixel addressable light output part and a pixel addressable light output part in an optical path, and the pixel addressable part being driven to provide a set of optical values for each pixel of the display, the backlight or non-pixel addressable part being driven by a temporal modulation, wherein the set of optical values is increased by the provision of intermediate optical values within the set by driving the pixel addressable part to provide an optical value for each pixel as a temporal sequence of output values, different values of the temporal sequence coinciding with different output levels of the modulated backlight or non-pixel addressable part, the method further comprising: determining the temporal sequence of optical values so that a perceivable output is a combination of the optical outputs of the two parts averaged over a duration of the temporal sequence.
Another aspect provides a method of configuring a display having a backlight or non-pixel addressable light output part and a pixel addressable light output part in an optical path, the backlight or non-pixel addressable part being arranged to have a temporal modulation, and the pixel addressable part being arranged to provide an optical value or each pixel as a temporal sequence of output values unrelated to colour components of optical value of the pixel, different values of the temporal sequence coinciding with different output levels of the modulated backlight or non-pixel addressable part, the method comprising: determining the temporal sequence of values so that an apparent output is a combination of the outputs of the two parts averaged over a duration of the temporal sequence.

As an additional feature, the method comprises measuring the optical outputs. Another such additional feature is selecting an optical output corresponding to a given input value, and storing a series of values used for obtaining the selected output.

Another aspect of the invention provides a convertor for converting an input signal for a display into a first signal for temporal modulation of a backlight or non-pixel addressable part in an optical path of the display, and a second signal for controlling a pixel addressable part in the optical path of the display, the second signal comprising signals for providing a set of optical values for each pixel of the display, the second signal also having a temporal sequence of output values for each pixel of the display, such that different optical values of the temporal sequence will coincide with different output levels of the modulated backlight or non-pixel addressable part to thereby provide intermediate optical values of the set by a combination of the optical outputs of the two parts averaged over a duration of the temporal sequence.

Another aspect of the invention provides a convertor for converting an input signal for a display into a first signal for temporal modulation of a non pixel addressable part in an optical path of the display, and a second signal for controlling a pixel addressable part in the optical path of the display, the second signal having a temporal sequence of output values for each pixel of a frame, unrelated to colour components of the pixel, different values of the sequence coinciding with different output levels of the modulated non pixel addressable part.

The features discussed can enable more accurate reproduction of both colour and greyscale images. An example discussed is a two-level dither scheme that does not suffer from disadvantages of well-known commonly used dither schemes. It can also address disadvantages of present matrix display devices such as colour shift problems, bad compliance to colour profiles, bad compliance to luminance target curves and combinations of those disadvantages.
Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the forms of the present invention described are illustrative only and not intended to limit the scope of the claims of the present invention.

### Brief Description of the Drawings:

How the present invention may be put into effect will now be described by way of example with reference to the appended drawings, in which:
Figs 1-6, 18 and 19 show prior art characteristics,
Figs 7 to 9 show embodiments of the invention, and
Figs 10 to 17, 20 and 21 show characteristics in graphical forms of embodiments of the invention.

### Description of the Preferred Embodiments:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

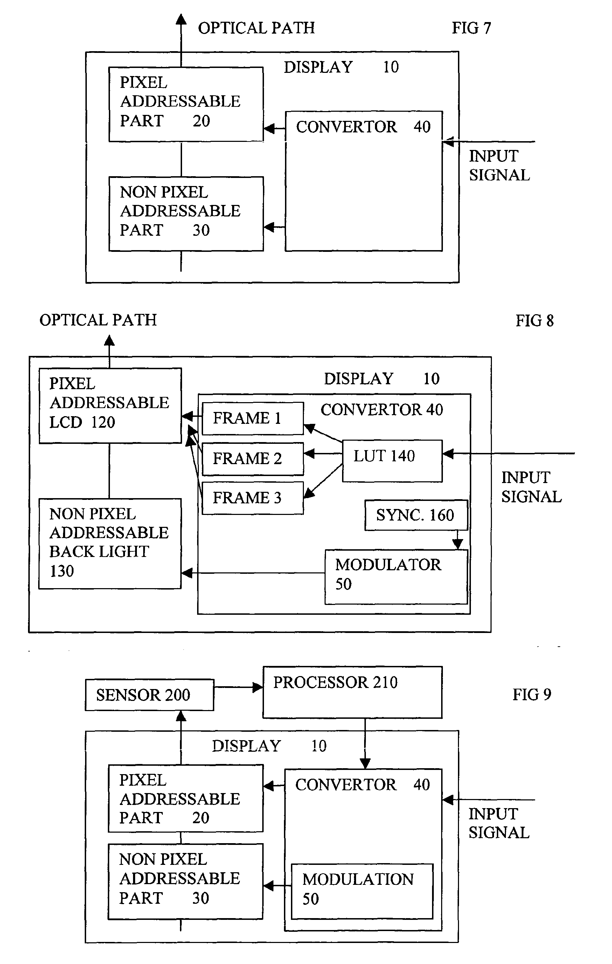

The embodiments described relate to a two-level dithering scheme that includes at least a combined modulating in time of both the pixel data and the backlight (in luminance or/and in colour point) of the display system. Figure 7 shows an embodiment in which a display 10 has a pixel addressable part 20 and a non pixel addressable part 30 in an optical path. A convertor 40 provides signals to drive these parts, based on an input signal. The convertor provides temporal modulations to the non pixel addressable part, and provides sequences to the pixel addressable part, so that the apparent luminance or colour of a pixel will depend on an average output over the length of the sequence. Other features can be added to the features of this figure. The order of the parts in the optical path can be reversed, depending on whether the optical source is in or before either of the parts.

Fig 8 shows another embodiment. In this case, the pixel addressable part is in the form of an LCD panel 120, transmissive or reflective. The non pixel addressable part is in the form of an optical source such as a backlight 130. The convertor has a modulator 50 for creating a temporal modulation for driving the back light. A sync. circuit 160 keeps the modulator synchronised to the pixel addressable drive signals, typically by synchronising to the input signal. The temporal sequences for each pixel of the pixel addressable part are created in this example by a look up table 140, which generates a series of values for each pixel of the input signal. The series is spread across a number of frame buffers (frame1- frame3), and the frame buffers are read out one after another to drive the pixel addressable part. The convertor can be implemented in conventional hardware or a mixture of hardware and software elements.

Figure 9 shows another embodiment, based on the embodiment of figure 7, so corresponding reference numerals have been used as appropriate. In this case, a sensor 200 measures the output of the display, or of the pixel addressable part. A processor 210 can be used to calculate adjustments to compensate for changes over time in operation in the field. Alternatively, the arrangement can be used during manufacture to configure the convertor for a desired performance, or to tailor the convertor to the characteristics of the pixel addressable part or other parts of the display, to compensate for manufacturing variations. In this case, the processor could select a series for each pixel, program the LUT in the convertor, then measure the corresponding outputs. The processor could calculate changes, or carry out a number of measurements and select a series which provides an output closest to the desired output.

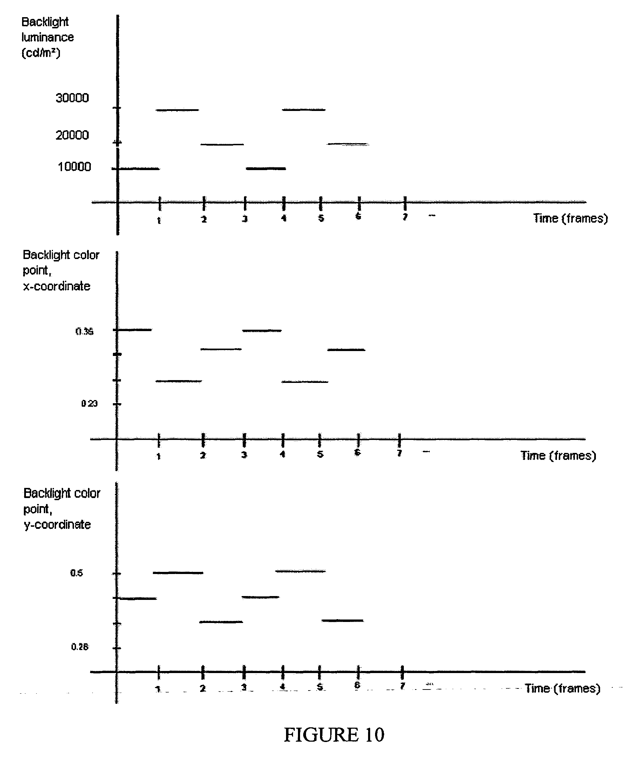

Figure 10 shows three plots of the luminance output of the backlight, and the colour in terms of the x-coordinate of the backlight and the y-coordinate of the backlight respectively. A modulation on frame-by-frame basis is applied where the luminance output of the backlight and/or the x-coordinate of the backlight and/or the y-coordinate of the backlight are modulated synchronously with the frame rate of the display system. Combined with the modulation of the backlight is the traditional modulation of the pixel data (dithering) although the exact dither scheme can differ significantly from wellknow temporal or spatial dither schemes. Examples of the dither pattern of the pixel data are explained later. Note that the modulation frequency of the backlight does not need to be exactly the output frame rate of the display system: a modulation period of a number of display frame periods is also possible. It is also possible to modulate at a higher frame rate than the output frame rate of the display system (for instance 100 Hz while the display output frequency is 50 Hz). This is comparable to what is done in DLP-projectors and colour sequential driving schemes. The modulation frequency of the backlight can also differ from the period of the used dither scheme.

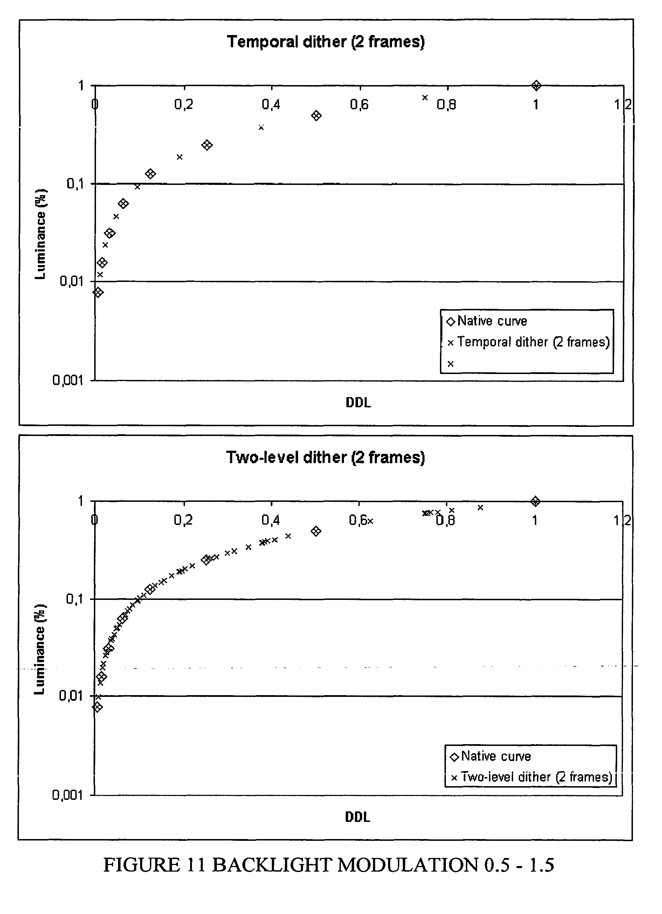

Figure 11 illustrates an important difference between the traditional 2-frame temporal dither scheme (upper part, prior-art) and the two-level dither scheme (lower part, according to an embodiment of the invention). In figure 11, the two-level dither scheme has a two-frame modulation period. The backlight is modulated only in luminance in this example and is set to values 0.5 and 1.5. This means that synchronously with the display frame rate the backlight will have luminance values 0.5, 1.5, 0.5, 1.5, ... Note that 0.5 and 1.5 are values relative to the normal (selected) luminance output of the backlight system. Also note that the average luminance output of the backlight does not change. Figure 11 shows the native luminance curve of the display system (backlight + LCD), the luminance response by using a two-frame temporal dither scheme and the luminance response by using the new two-level dither scheme. It is clear from this figure that the newly created greyscales created by the temporal dither scheme are equally spread over the complete luminance range. This means that a lot of greyscales (at the higher luminance values) are not useful. On the other hand, the new two-level dither scheme has many more greyscales located in the lower luminance part, and the greyscales are no longer spread regularly (equidistant).

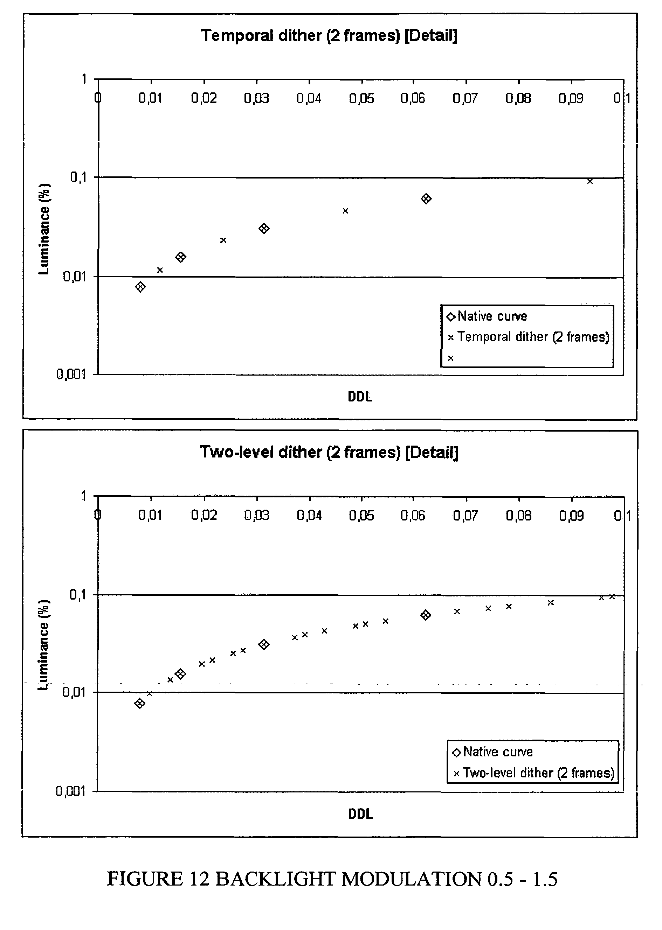

It will be clear for the user that by using this embodiment of the invention it is possible to select how the newly created greylevels are exactly spaced on the luminance axis. This allows for example the creation of display systems that are very well calibrated to the DICOM GSDF standard: the absolute luminance value of the black or the white is then chosen according to the desired peak white luminance level and the exact shape of the display transfer curve is selected according to a dither algorithm. This is configured in that way so that the newly created greyscales fit on the desired target curve). Figure 12 shows the same comparison but in a detailed view of the lower greyscale values (low luminance). It is clear that a two-frame two-level dither scheme has much more grey levels compared to traditional two-frame temporal dither and these greyscales are also located in a more useful way. This means that the new two-level dither scheme will have better target luminance curve response compared to a temporal dither scheme over the same amount of frames and also that for a specific required compliance to a target luminance curve that the new two-level dither scheme will require a lower modulation period (number of frames) and therefore less motion artefacts to obtain the same compliance level. A first example is for achieving a specific target luminance response curve. Example platforms can be (not limited to): greyscale LCD displays, colour LCD displays, LCD/DLP/DMD projection systems (both greyscale and colour).

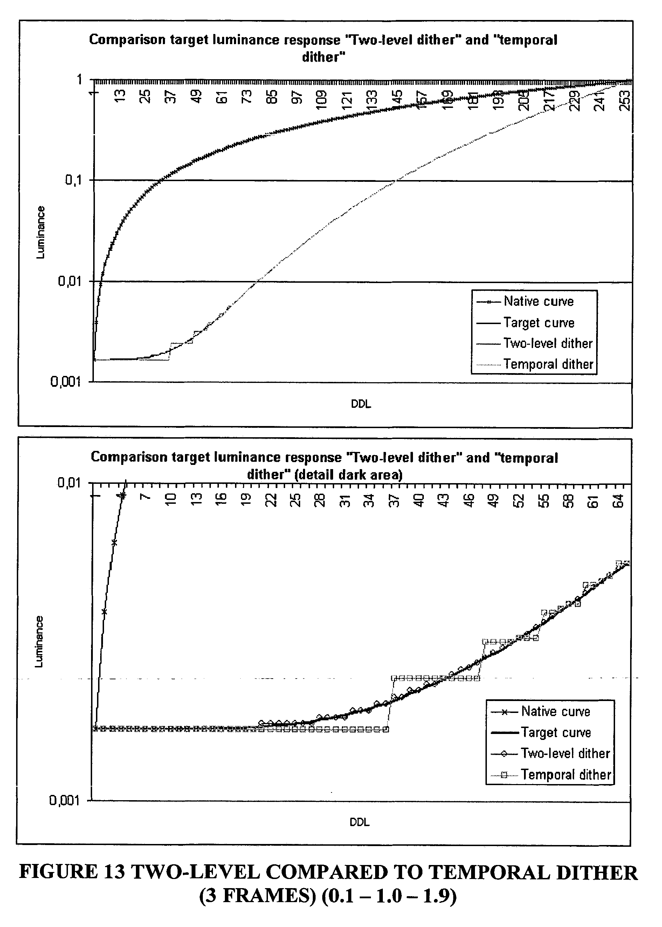

Figure 13 (OK) shows an example of a specific gamma-like target luminance curve with a display system that has a linear native luminance response curve (such as a DLP or DMD projector). Note that this situation represents the most difficult situation: present DLP/DMD projection systems are unable to result in high quality at lower luminance levels: the number of greyscales at lower luminance levels is very limited because the large difference between native curve (typically perfectly linear) and target curve and also using large dither schemes is not possible because of motion artefacts or resolution loss. Figure 13 also shows a comparison between a three-frame temporal dither scheme and a three-frame two-level dither scheme. It is clear that especially at the lower luminance values the two-level dither scheme has much better compliance to the target curve and at the same time the two-level dither scheme has also very good compliance (equal or better compared to temporal dither) at higher luminance values. In this case the three-frame two-level dither scheme used backlight luminance modulation factors 0.1-1.0-1.9. This means that the luminance value of the backlight will be modulated synchronously with the frame rate of the display system and will have luminance values (relative to the normal selected luminance output of the backlight) of 0.1-1.0-1.9, 0.1-1.0-1.9, ... Note that the average luminance output of the backlight system is still the same (average 1.0).

Table 1 shows the detailed pixel data dither scheme of the two-level dither scheme and also numeric performance results. A first column shows the video level (digital driving level DDL) of present greyscale. A second column shows the luminance response for that greyscale obtained with the two-level dither scheme. Another column shows the target luminance response for that video level. Then three columns (three columns right of the column named pixel data) show the exact modulation scheme used in this example.

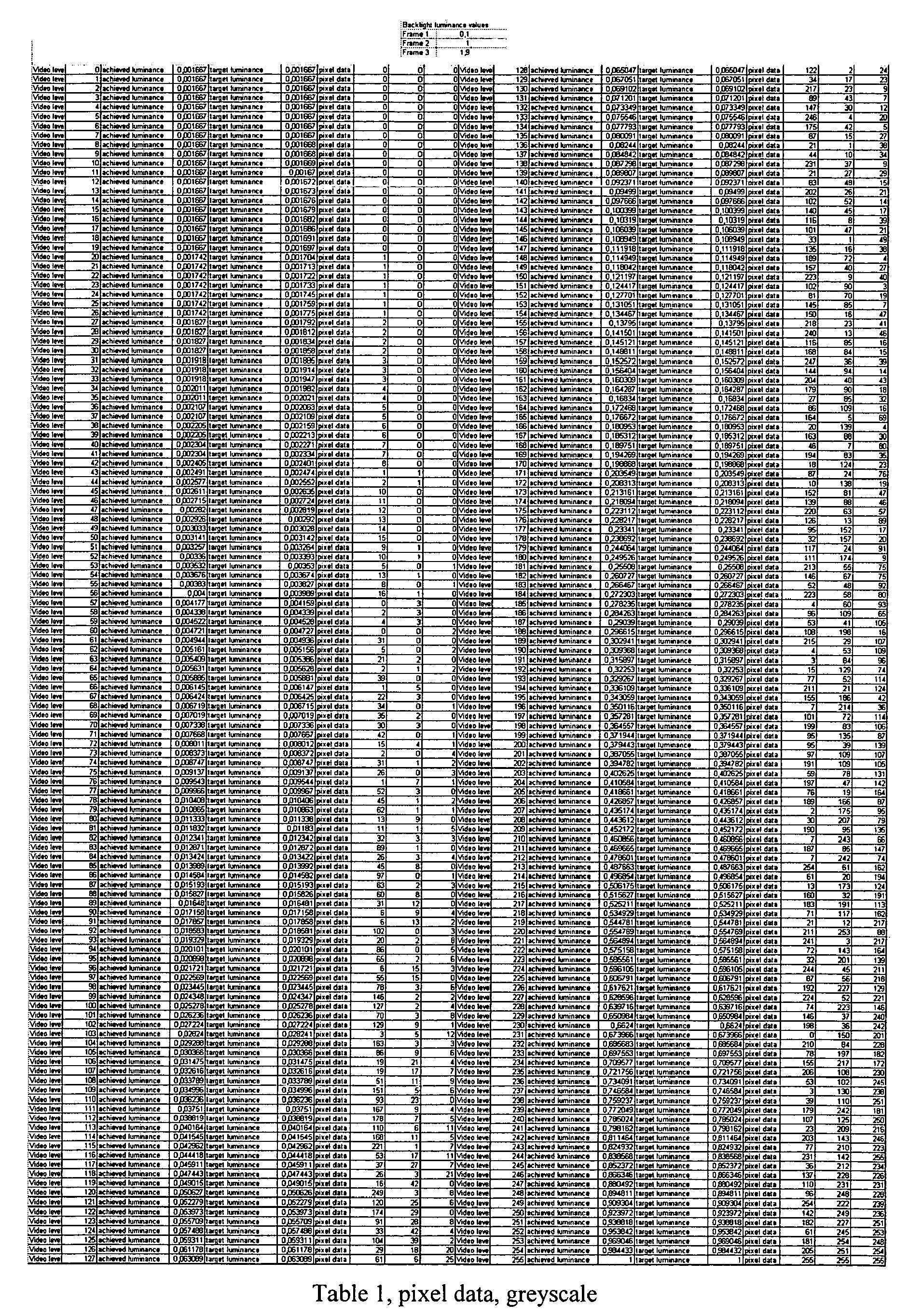

For instance for greyscale 127 the required modulation of the pixel data is 61 - 6 - 25. This means that if greyscale level 127 is to be shown then for the frame with backlight value 0.1 the pixel value sent to the panel (for instance LCD/DLP/DMD) will be value 127. For the frame with backlight luminance 1.0 this will be pixel value 6 and for the frame with backlight luminance value 1.9 this will be pixel value 25. Another example: to create target greyscale level 160 the modulation scheme will be: (backlight luminance, pixel data sent to panel)= (0.1, 144); (1.0, 94); (1.9, 14); (0.1, 144); (1.0, 94); (1.9, 14); ... Note some embodiments of this invention can be especially useful for portable equipment applications where low-cost LCD panels (mostly 6 bit) are used. The embodiments describe an easy, cheap method to improve the number of greyscales.

Note that the results in for instance the pixel data of table 1, were obtained by measuring the transmission of the LCD panel as a function of its driving signals. The measurement itself was performed by just setting the backlight to a constant value and measuring how much light the LCD produced while a sweep on the video signal was performed. The result then can be a table showing the driving signal (for instance for 1024 grey levels going between 0 and 1023) and the resulting transmission (for instance going between 0% and 100% where 100% is scaled and corresponds to the luminance value of the panel when driven at maximum grey level). Knowing the luminance intensity of the backlight and knowing the pixel data of the LCD, it is straightforward to calculate the luminance that will be perceived by the user of the display. For example: suppose that a specific video level has a transmission of 50% and that at that moment the backlight is set to twice the normal luminance intensity. Then the perceived luminance value for that interval (single frame) in time will be equal to the original luminance intensity (50%x200%= 100%).

A second advantage of the two-level dither scheme concerns the problem of colour-shift in greyscale display systems. In this case not only the luminance value of the backlight will be modulated but also the colour point of the backlight. This means that for consecutive frames the backlight can have a completely different colour point. In this way it is possible to eliminate the colour shift in greyscale display systems (by selecting correct colour point of the backlight for the different frames and by also selecting the appropriate LCD pixel dithering scheme pixel data for each video level and for each frame so that the colour point of the combination backlight, LCD results in a target colour point for the overall display system) and at the same time be compliant to a target luminance response curve.

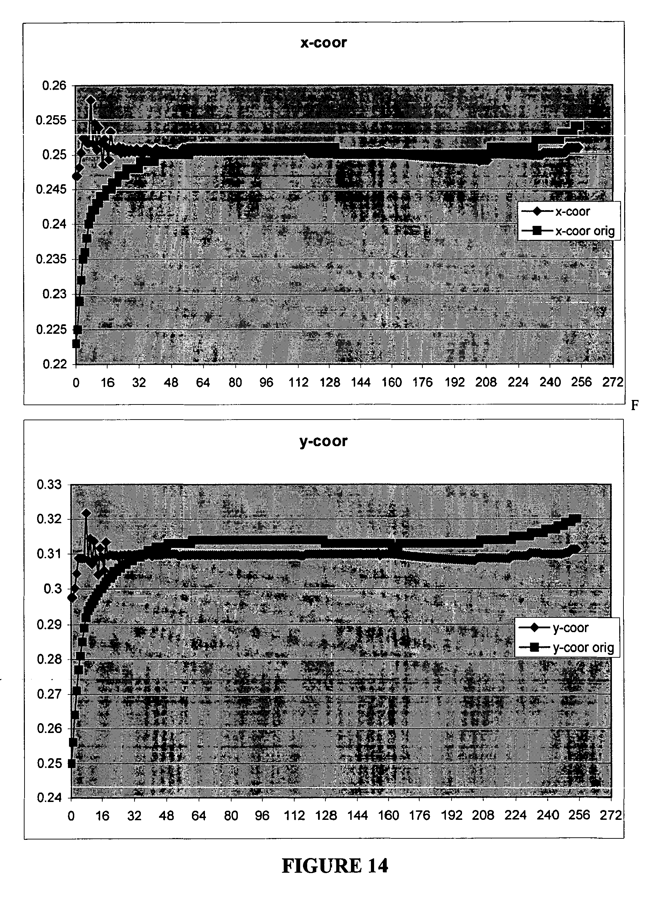

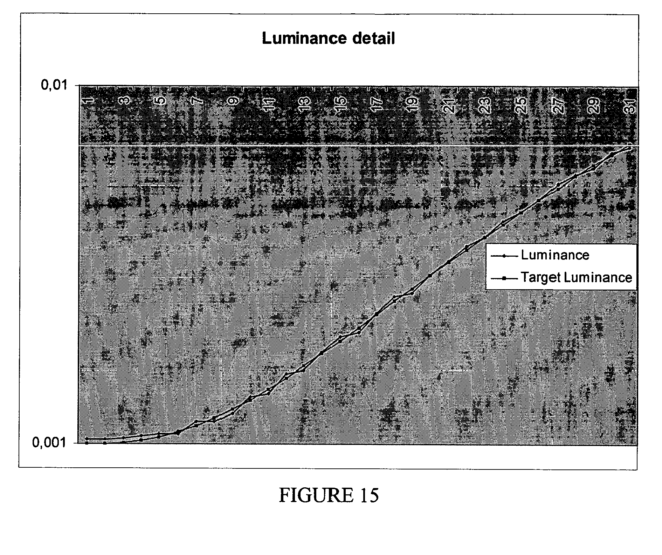

Figure 14 shows the colour shift of a greyscale medical LCD display in function of the greyscale value (digital driving level or DDL). Both the original colour-coordinates (native colour-shift of the LCD) and the colour-coordinates by using the two-level dither scheme are shown. In figure 14 a two-frame two-level dither scheme was used and the target was to balance between accurate luminance target response and elimination of the colour shift. It is clear that the colour shift is reduced significantly. The native colour coordinates varied between (x; y)= (0.223; 0.25) and (x; y)= (0.254; 0.32) while the colour shift using the two-level dither scheme is only (x; y)= (0.242; 0.298) to (x; y)= (0.258; 0.322). Note that a normal human person is able to see colour differences of distance 0.005 in the (x; y) colour space. Figure 15 shows the target luminance response for this same configuration. The results show that it is possible to reduce the colour shift problem and at the same time still be compliant to a luminance target curve. Note that the user of the display can select this balance between colour compliance and target luminance response curve.

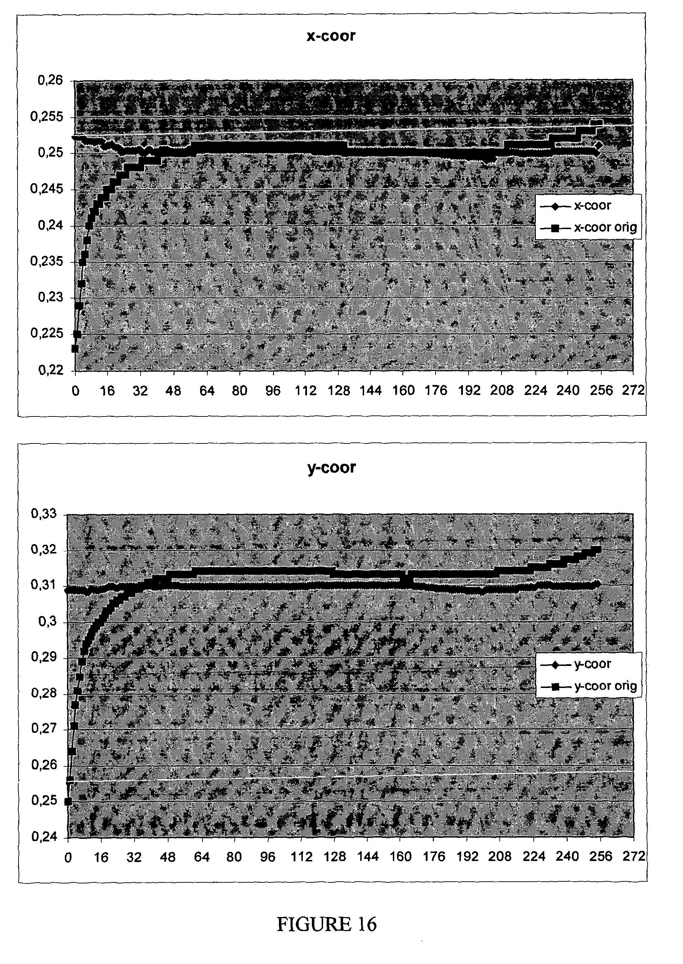

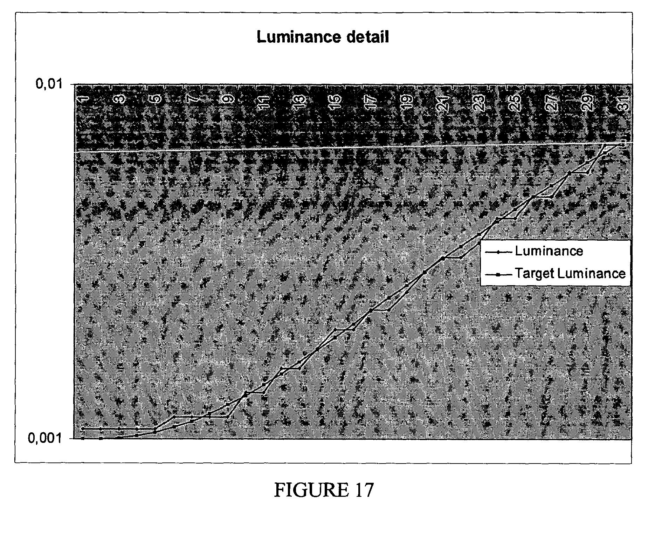

Figure 16 and figure 17 also show another two-frame two-level dither modulation scheme but now the main target was to eliminate the colour shift. The same display system was used in figures 14, 15, 16 and 17. Figure 16 shows that it is possible to (almost) completely eliminate colour shift problems in greyscale display systems by using the two-level dither scheme. The remaining colour differences are easily within 0.005 distance in the (x; y) colour space. Even when optimised to avoid colour shift the luminance target response is still very good but not as good as in the balanced situation (see figure 17). Note that it is also possible to actually introduce a desired colour shift instead of removing a colour shift. For instance it could be an advantage if the colour point of the grey levels changed in a defined way from rather red to rather green when the grey level increases. This can be interesting if only a limited amount of colour is desired in the display system. For instance for displaying satellite images some colour is desired, but without using a colour LCD (because of lower luminance output and lower contrast ratio). The luminance target compliance for the colour-optimised case is shown in figure 17. Table 2 shows an example of the pixel data used in the colour-optimised situation. The backlight luminance modulation was (1.995; 0.01) and the colour point modulation of the backlight was (x; y)= (0.99; 0.98) for frame 1 and (1.55; 1.9) for frame two. This means that in time (on frame-basis) the backlight will have following characteristics (luminance; x-coor; y-coor): (1.995; 0.99; 0.98), (0.01; 1.55; 1.9), (1.995; 0.99; 0.98), (0.01; 1.55; 1.9).... Note that again these factors are relative compared to the native values of the backlight. This means if the native luminance of the backlight would be 10000 cd/m² then the modulation luminance values would need to be 10000x1.995 cd/m² in frame 1 and 10000x0.01 cd/m² in frame 2. The same principle holds for the colour temperature: for example: if the native colour temperature of the backlight would be (x; y)= (0.24; 0.32) then the modulation colour temperature would be (x; y)= (0.24x0.99; 0.32x0.98) in frame 1 and (x; y)= (0.24x1.55; 0.32x1.9) in frame 2. Table 2 shows a pixel data modulation scheme to obtain the results of figure 16 and figure 17. In table 2, the pixel data to be sent to the panel for each target grey level is shown for the two frames.

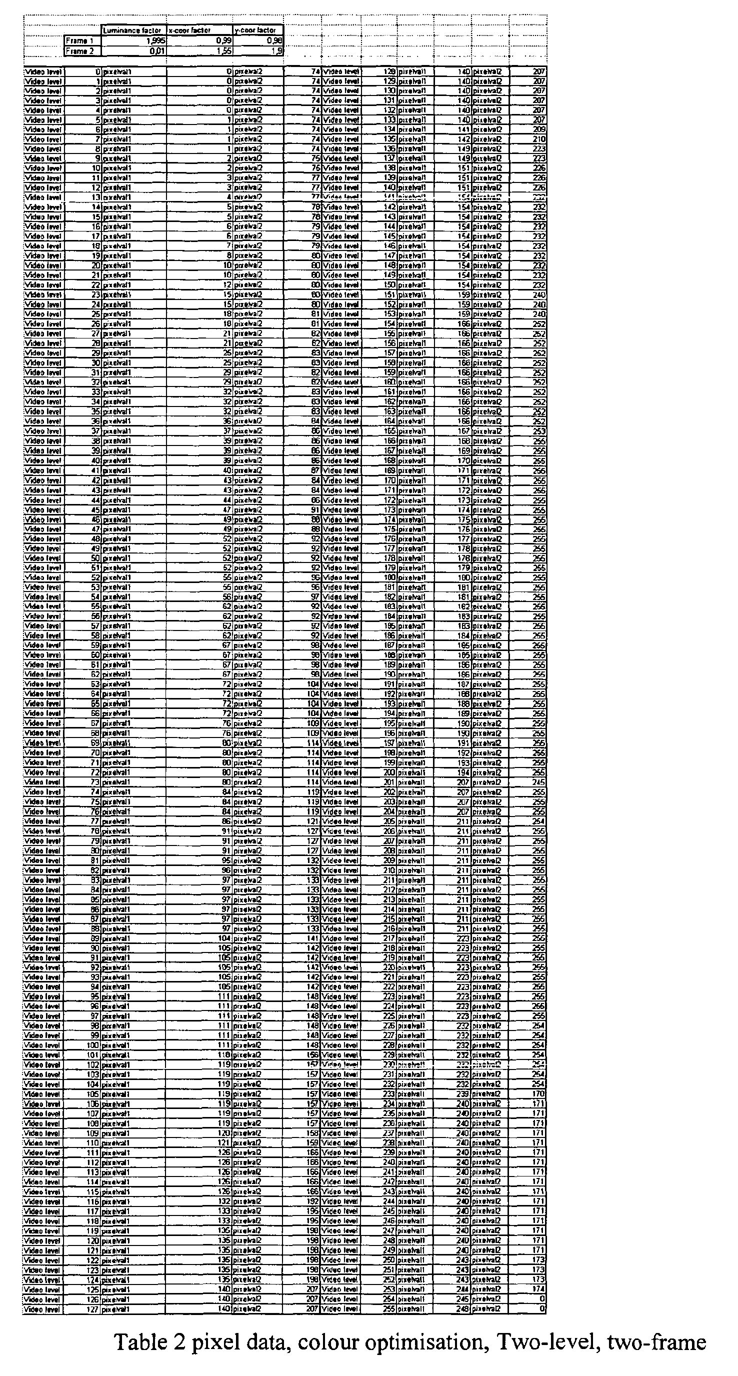

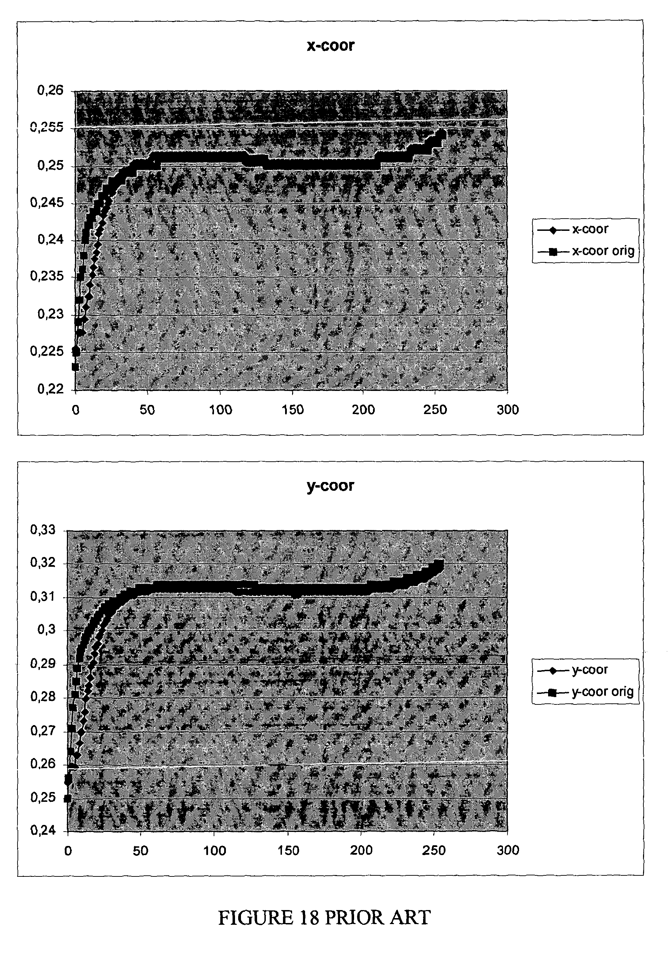

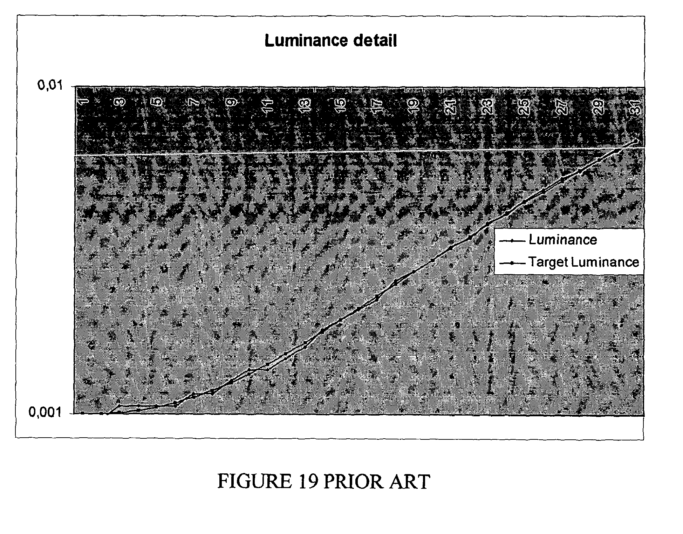

For example: to obtain target grey level 105 the actual pixel data sent to the panel will be 119 in frame 1 (frame with backlight luminance 1.995) and 157 in frame 2 (frame with backlight luminance value 0.01). As reference, figures 18 and figure 19 show the prior-art of temporal dithering and the colour shift and the compliance to the target luminance for the two-frame temporal dithering scheme and this for the same display system that was used in figures 14-17.

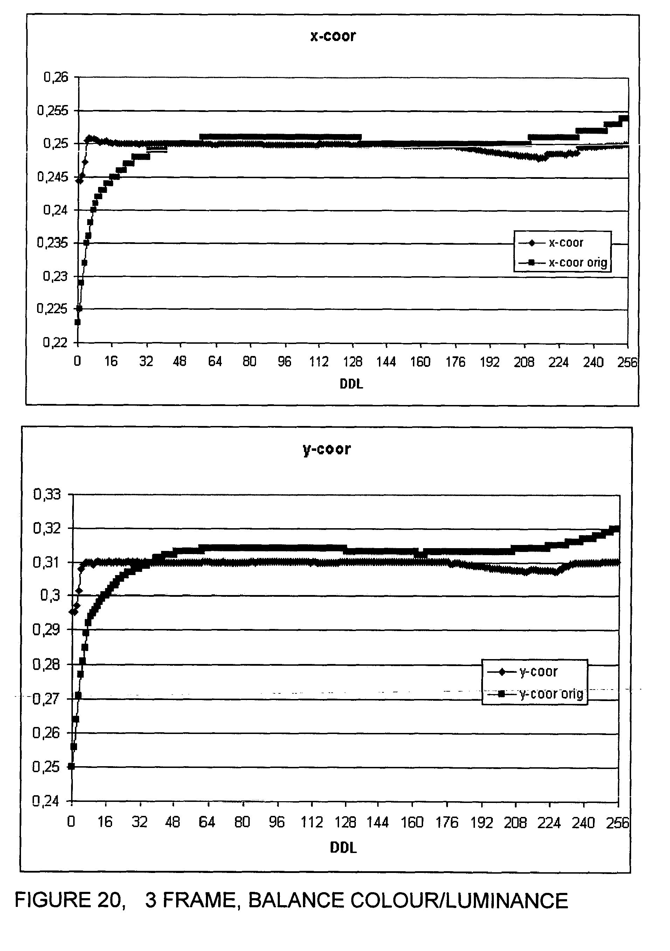

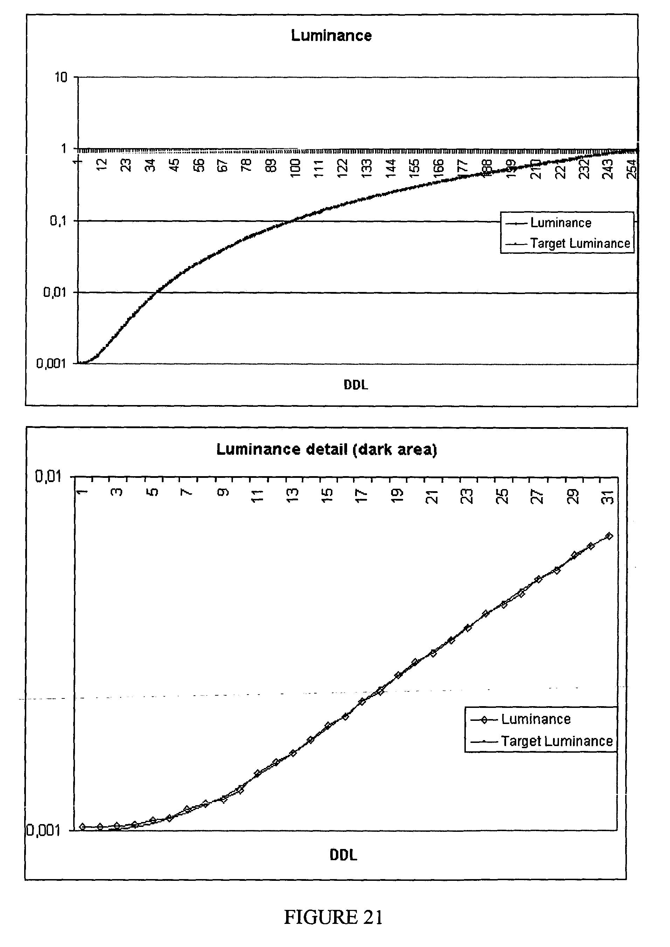

Of course the two-level dither scheme can have period length other than two frames. In fact it can have an arbitrary period length as long as it is synchronized with the frame rate of the display system. This means that the modulation frequency of the backlight can be equal, higher or lower than the frame rate of the display system. As examples, figures 20 and 21 show the performance of the two-level dither scheme but now for period of three frames. Table 3 shows an example of the pixel data to achieve the modulation scheme.

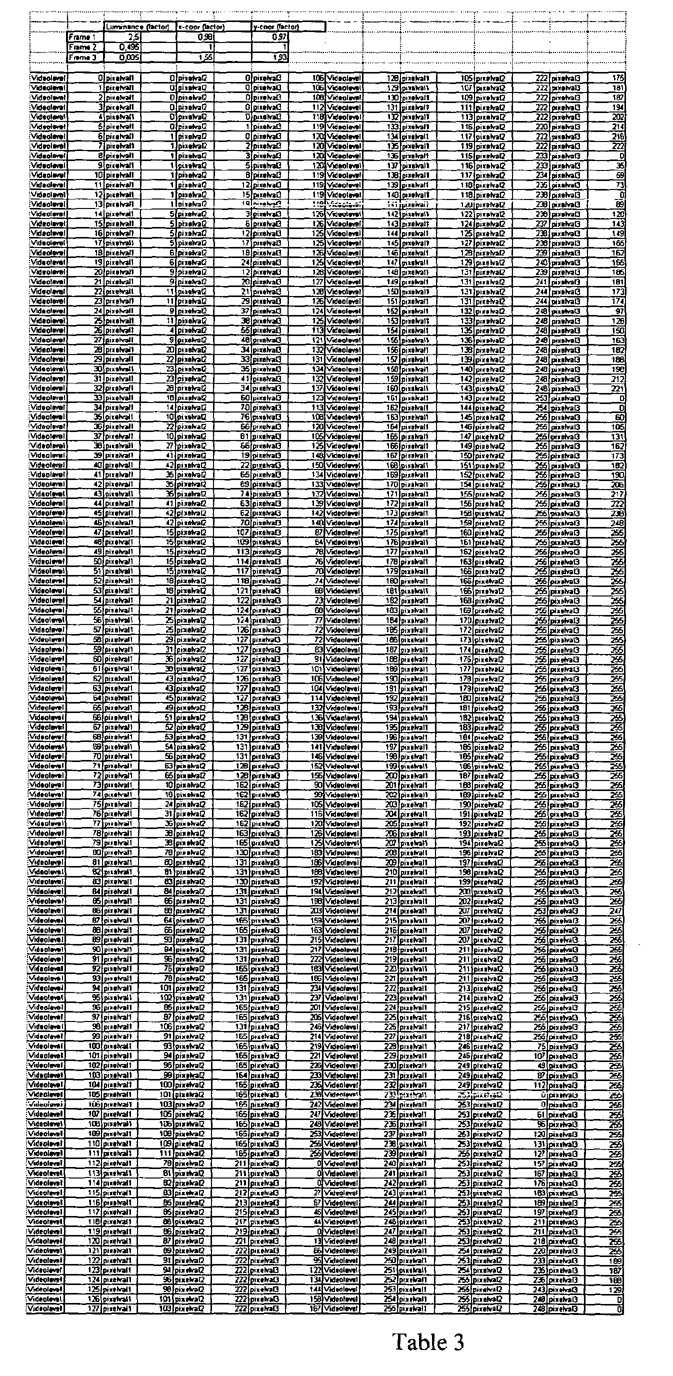

It is easy to see that by using a three-frame two-level dither scheme it is possible to almost completely eliminate colour shift and at the same time have excellent compliance to the target luminance curve. The exact length (period) of the two-level dither scheme is to be determined by balancing accuracy (both luminance and colour) and introduced artefacts (motion artefacts if the period gets longer). As already explained it is also possible to balance the accuracy between eliminating colour shift and compliance to the luminance target curve. Note that it is also possible to introduce a specific chosen colour shift in the greyscale display system instead of keeping a constant colour point. It could for instance be of interest to make darker greyscales look more green and higher greyscales look more red. Of course any target colour behaviour is possible. With LCDs this has the advantage that there is no need for colour filters so the light output and the contrast ratio will be much higher compared to a colour LCD. This means that there will be (a limited) colour experience with a greyscale display system without having the disadvantage of a colour display system. Possible application areas are satellite imaging (to make interpretation of for instance altitudes easier). Another feature could be that all pixels with value below a certain threshold are green whereas all pixels above the threshold are red (in several gradations for example).

A third possible application is to improve colour-profile compliance of colour display systems. In this case the backlight luminance and/or colour point will be modulated synchronously with the display frame rate and also the display pixel data (consisting of multiple coloured sub pixels) will be dithered.

### Combination with existing technologies:

In the following, some practical implementation issues of the embodiments are discussed, including combinations with existing technologies. The embodiments described can be used in combination with colour sequential driving technology commonly used in displays such as projection system displays for instance. In a colour sequential system a colour image is generated by sequentially generating multiple primary colour images that together form the colour image. For instance: in a colour sequential LCD display system, the backlight will switch continuously between for instance Red, green and Blue. In a first frame the backlight will be red, and during that frame the LCD pixels will be driven as to represent the red component in the colour image that is to be displayed. In the second frame the backlight will be set to green, and the LCD pixels will be driven as to represent the green component in the colour image that is to be displayed. In the third frame the backlight will be set to blue and the LCD pixels will be driven as to represent the blue component. If the frame rate is high enough then the human eye will integrate these images and the combination of these three individually monochrome frames will be perceived as a colour image. The same principle can be used in projection displays. Because the light source of a projection display can generally not be switched in colour point one normally uses a filter (colour) wheel to create the different colours in the backlight. This means that the backlight itself consists of a light source (normally white) and the colour for the individual frames is created by a colour wheel that continuously changes the backlight colour from for instance red to green to blue. Often there is also a white field present to boost the luminance output. Note that the same problems are present with colour sequential technology as with normal three-colour display technology or monochrome display technology: there are very often not enough greyscales in the darker luminance areas and the colour shift problem of the LCD is still present (for instance: the white field of a colour sequential system will still drift in colour point).

The embodiments of the present invention can be incorporated with minor changes to the colour sequential technology. First of all: in colour sequential technology the colour images are created by sequentially driving three different colour sources at maximum intensity. Indeed: in case of an LCD with LED backlight all red LEDs will be driven in frame one and no green or blue LEDs will be driven, in frame two only the green LEDs will be driven and in frame three only the blue LEDs will be driven. The same thing is valid with the filter wheel approach: only one colour component will be transmitted during each frame. For the combination with embodiments of the present invention, above the colour sequential modulation, another modulation is added. In case of the LCD display with LED backlight, the colour point of the "primary colours" is extra modulated with a longer period. In other words: if one takes the example of a colour sequential LCD display that uses three frames Red, Green and Blue. Then the combination with the present invention will mean that the red colour itself is also modulated over time. A 2-frame two-level dither scheme for instance would mean that there are two (slightly) different variations on the red colour and that the luminance value of those two red colours can be different. The same concept is valid for the green and blue colours. In other words: the three frames from the colour sequential display system can also be compared to a single frame on a colour display, and that "colour display frame" can be modulated in colour and/or luminance over time in order to have a working implementation. In other words, a starting point can be a normal colour sequential system could have backlight values for sequential frames as follows: R, G, B, W, R, G, B, W, ... where R represents a red-alike colour with specific colour point and luminance and also G,B,W represent light with a specific colour point and luminance value. If for example a two-level dither scheme is used on this colour sequential display system then the backlight values for sequential frames could look like this: R1, G1, B1, W1, R2, G2, B2, W2, R1, G1, B1, W1, ... where R1 represents a red-alike colour with specific colour point and luminance and R2 represents a red-alike colour with colour point and/or luminance value that is different from R1. Also G1, G2; B1; B2; W1; W2 all represent pairs that have difference in colour point and/or luminance value (although it is not a requirement that all primaries are modulated, it is for example possible that R1 differs from R2, but that at the same time B1 is equal to B2).

In a colour sequential projection system with filter wheel the concept is the same. In this situation it is possible to add extra colour filters in the existing filter wheel (for instance a 8 colour filter wheel instead of a 4 colour filter wheel if it is desired to have a 2-frame two-level dither scheme, a filter can consist of only a neutral density filter to change the luminance intensity or can also change the spectrum of the light and therefore the colour) so that the extra modulation on top of the colour sequential driving is achieved. In that case the filter wheel can still rotate at the same speed although one could also increase the speed of the filter wheel and the panel itself in order to have a same "actual frame rate" as perceived by the user of the display system. Another possibility is to add an extra filter wheel before or after the existing filter wheel. This filter wheel will then separately from the original one perform the extra modulation that is required for the two-level dither scheme. The size of the filter wheel (number of filters) can be different for the two filter wheels.

Another possibility is to use switchable mirrors instead of a filter wheel. Materials exist that can by means of an applied voltage switched between a transmissive situation where most or some part of the light is transmitted, and a situation where most or a part of the light is reflected or absorbed.

Note that it is also possible to optimise the embodiments to include spatial variations over the display system area. For instance: with LCD displays there is always some variation in luminance behaviour (transfer curve) and colour behaviour (transmission spectrum) over the display area. This could mean for instance that certain areas on the LCD are more bright or dark than other areas or that there is a significant difference in luminance transfer curve depending on the exact place on the LCD. The same problem is also present for colour behaviour. It is possible to optimise the two-level dither scheme by really taking into account the different luminance and/or colour behaviour of the display system over its complete display area. This could mean using other pixel data sent to the LC panel depending on the spatial location of the respective pixels being processed (this means that it is possible to combine the present invention with digital uniformity correction techniques where the pixel data of up to each individual pixel is changes in order to obtain a better uniformity in luminance and/or colour). Some display systems however have a fine pitch backlight system. Examples exist where the backlight of the LCD consists of several hundreds or thousands of small LEDs with a pitch of only a few millimetres. In that situation each individual LED only has effect on a relative small number of pixels located in the neighbourhood (above) of that LED. In such a situation it is also possible to also define specific frame luminance and/or colour values for the individual LEDs depending on their location and according also an individual pixel data scheme for all pixels (or a group of pixels) depending on the exact spatial location on the LCD display.

### Practical remarks:

Selection of the exact dither variables (number of frames, backlight intensities for all frames, colour point of the backlight for all frames, display pixel dither scheme for all frames and for all video levels) is based on a number of parameters. A first parameter is the behaviour of the backlight: the luminance and colour behaviour of the backlight in function of the driving level of the backlight (typically a backlight can be driven between a minimum DAC-value zero and a maximum DAC-value for instance 4095. The DAC-value is related to the current sent to the backlight lamps or LEDs). A second parameter is the behaviour of the display panel (LCD, DMD, DLP, ...) This can be regarded as the luminance and colour behaviour of the panel as a function of the DDL of the panel. In other words: how does the panel behave in luminance and colour behaviour in function of the pixel data. For a transmissive LCD for instance this can be expressed as a transmission spectrum in function of digital driving values of the LCD. The table of digital driving values can consist of a one-dimensional array in case of a monochrome LCD, a multidimensional table in case of a monochrome LCD with each pixel consisting of multiple sub pixels or a multidimensional table in case of a colour LCD with each pixel consisting of a number of coloured sub pixels. This means that the optimal dither variables are depending on parameters that can be different for each display system. Indeed: the backlight behaviour can differ for each individual backlight (for instance a LED backlight where there is typically a lot of variance between luminance and colour behaviour between different batches of LEDs) or for each individual panel (for instance: the transmission spectrum of an LCD panel can differ significantly from panel to panel).

Therefore there are two possibilities: if the variations in parameters do not differ a lot between individual devices then the same dither variables can be used for all devices of a same type or a same batch of devices. This significantly reduces the time to characterize the display systems and to determine the exact dither scheme that will be used. If at the other hand a very exact reproduction of luminance and/or colour is desired then each individual display system can be characterized to determine an optimal dither scheme for each display system. Another approach can be to select the exact dither scheme such that even when variation between the display systems is present the performance will still be more or less the same. For example: suppose that the backlight is based on LEDs. LEDs that are dimmed to deep will not emit any light anymore. The exact dimming range can differ between different batches of LEDs or even from LED to LED. Therefore a compromise would be not to use very deep dimming (so not optimal) but choose a value that will be safe for all display systems.

Embodiments of the present invention use a combination of backlight luminance and colour coordinates and panel behaviour to obtain an accurate reproduction of colour and luminance. If of course the behaviour of the backlight (luminance source of the display system) and/or the panel (modulation system of the display system) changes then the dither scheme might not be optimal anymore. Therefore it is possible that extra measurement devices are used to compensate for these behaviour changes. A first example is that a sensor can monitor the luminance and colour behaviour of the backlight system. If the luminance and/or colour behaviour changes then a new dither scheme can be calculated based on the known original colour and luminance behaviour and the new measured colour and luminance behaviour of the backlight system. Suppose that after a few thousand hours of operation the backlight has a colour shift towards red, then this information can be used to make sure that the desired colour point of the backlight for the individual frames of the dither scheme is still correct.

The same thing is of course valid for luminance: suppose that the transfer curve luminance versus driving level of the backlight system changes, then it might be necessary to use other DAC-values to drive the backlight system. This can be a continuous process: measuring the backlight output and calculating the new dither scheme. Note that a threshold can be built in: as long as the performance due to changes in backlight behaviour do not exceed a certain threshold then the current dither scheme is used. If the threshold is exceeded then a new dither scheme can be calculated. Note that the sensor measurements can be done continuously or at fixed or at selected points in time. Note that it is not always necessary to measure all individual frames of the dither scheme: if only one frame is measured in luminance and colour then very often the measurements for the other frames can be predicted with this information. Also note that it is possible to also measure the transmission spectrum of the LCD (ideally in function of driving level, although there are situations possible where all driving levels suffer from a same change in transmission spectrum) during lifetime of the display. This information then can also be used to make sure that the two-level dither scheme is configured optimally. These measurements of the transmission spectrum of the display system can take place on request of the user, at regular times or continuously.

Combination with stabilization devices is also possible. A stabilization device typically measures parameters such as but not limited to luminance and/or colour point or contrast ratio in a specific situation and makes sure that for example (but not limited to) luminance and/or colour is always equal to a selected target value (by changing the backlight driving values or the pixel values). For instance: in medical imaging the white luminance (luminance output when fully white is displayed) of the display is very often kept stable at a selected level (for instance 500 cd/m²). It is of course possible to use such a stabilization system together with embodiments of the invention. In this situation the white luminance (and perhaps also the white colour point) will determine luminance output and the colour point of the display. The two level dither scheme then can be configured so that both the luminance and colour point at full white do not change anymore. This can be done by making sure that the average luminance output over the dither period is equal to the target luminance and also that the average colour point over the dither period is equal to the target colour point.

The calculation method of the dither variables (backlight luminance and colour values and pixel dither data) can give more accurate results in many situations if measurements are of the final output of the combination of backlight system and panel. This is because the backlight system produces light with a certain spectrum that is usually well spread over the visual spectrum range (380nm -800 nm). At the same time: also the transmission spectrum of the panel is spread over the same visual spectrum range. For example: suppose a monochrome display system with a backlight is used and the colour shift measured when going from video level zero to video level maximum. It is then not a priori certain that proportionally the same colour shift will be seen if there are changes to the colour of the backlight. In other words: suppose that the x-coordinate of the measured light of the display system is 20% higher at maximum video level compared to minimum video level then it is not a priori certain that if the backlight colour is changed, that this will still be valid. Therefore it is in theory necessary to measure a lot of combinations of backlight luminance/colour point and panel or at least to verify the performance of the dither scheme. The fundamental reason is that the light sources in the backlight system (typically white light or red, green and blue sources) do not follow the spectrum curve of the x-coordinate and the y-coordinate.

There is a possibility to avoid these many measurements by calculating mathematically based on measurements of the transmission spectrum of the backlight (possibly for multiple luminance values) and a characterization of the transmission spectrum (filter characteristic) of the panel. In other words every combination of backlight luminance/colour point with panel can then be predicted. In other words: it is then possible to predict the luminance and colour behaviour of the complete display system based on the settings of the individual components. Also if a backlight system with sources that have a very narrow spectrum (such as certain LEDs) is used, then it could also be acceptable to assume that the panel will result in the same colour shift (proportionally) and this independent of the colour point of the backlight system. Note that due to metamerism it is possible that multiple solutions are found that seem to perform equally well in luminance and/or colour reproduction accuracy. However, one such a solution might have other favourable properties such as less sensitive to flicker and easier to manufacture (because the required colour points or dimming ratios are more feasible).

When using LCDs with long response time it might be interesting to put extra constraints on the dither scheme for the pixel data. Indeed: with the embodiments described, it is common that in consecutive frames the pixel data must change from very low to very high values. If the response time of the LCD is very long then it is possible that visual artefacts are introduced in this way: the luminance and/or colour values for that pixel can be completely wrong. One possible solution is to avoid using transitions that the LCD is not capable of. It is easy to measure a transition chart that shows the rise and fall times of the LCD when going from one video level to another video level. If the rise or fall time for a particular transition (for instance video level 23 - video level 214) is too large, then this transition can be avoided in the dither scheme and another (less optimal related to reproduction of colour point and/or luminance) dither scheme can be used for that particular case (this could also include using other luminance and/or colour point values for the backlight).

Another solution is to use a blinking backlight system. Indeed: it does not really matter where exactly the light transmission takes place in the frame. This can be equally distributed over the frame or concentrated in one or more parts of a frame period. If one uses a blinking backlight for instance, that concentrates most of the light energy at the end of each frame then the problem of slow LCDs can be reduced. This means of course that the backlight will need to be able to emit the energy more concentrated (an equal amount of energy in a smaller part of time). If the energy is concentrated (for instance but not limited to) at the end of the frame, then the LCD has more time to complete the required transitions before the actual light is produced. This means that the problem is solved for all transitions of pixels (that would normally result in artefacts and/or wrong luminance and or colour point) and that take place before the backlight produces light.

Also note that it is possible to combine embodiments of the present invention and various response time improvements techniques that use changes in the pixel data such as but not limited to overdrive techniques, feed forward and feed backward compensation.

Another method to cope with the response time of the panel is to actually take into account the response time of the panel when calculating the required dither scheme. If it is known in advance that a particular pixel transition requires a particular amount of time then it can be calculated what the light will be that is produced by the display system during that transition. Of course this requires that at all times the exact transition times are known. Note that the response time of LCD can change over time and with temperature.

There are also other possible reasons to not use certain transitions between grey levels in the pixel dither scheme or to not use at all specific grey levels in the pixel dither scheme. It could be useful to avoid specific video levels that have bad uniformity (luminance and/or colour) over the display area or that have bad viewing angle characteristics. The two-level dither has indeed the ability to avoid specific driving signals sent to the LCD by changing the backlight luminance and/or colour point for some or all frames of the dither period. For example: on a greyscale LCD, instead of using video level 8 (rather dark level) with bad viewing angle behaviour, it could be interesting to use level 200 (rather high video level) with better viewing angle behaviour and make sure that the luminance output is still correct by changing the luminance value of the backlight for one or more frames. In this case it would be required to decrease the luminance value of the backlight for at least one frame in order to make sure that the average luminance level is still correct.

A possible problem with embodiments of the present invention is that the two-level dither scheme could introduce flicker on the display system. This is because the luminance intensity of the backlight is modulated from frame to frame and rather large differences between frames are possible. An easy solution to avoid flicker is increasing the frame rate of the display system, but unfortunately this is not always possible. Another solution is to keep the luminance value of the frame more or less constant by inserting a phase difference between the modulations of the different colour components. For instance: in a colour LCD system with a three-frame two-level dither scheme, with luminance intensities of the backlight being L1 for frame 1, L2 for frame 2 and L3 for frame 3, one could in frame one drive the red colour component to luminance value L1, the green to value L2 and the blue to value L3. In frame two then one could drive red to L2, green to L3 and blue to L1. In the third frame one could drive red to L3, green to L1 and blue to L2. Suppose that L1 corresponds to 1.5 times the average luminance value of the backlight, and L2 corresponds to 1 time the average luminance value of the backlight and L3 corresponds to 0.5 times the average luminance value of the backlight. Then the actual perceived luminance for frame one will be L1+L2+L3= 1.5+1+0.5= 3 and this is also the luminance of frames 2 and 3. So there is no luminance flicker present anymore. Of course the luminance intensity of the three colours is normally not the same (green could have higher intensity than red and blue) but the general idea has been described here: by inserting a phase difference or scrambling the modulation scheme for the three colours in a well-chosen way, it is possible to reduce luminance flicker. The same argument is valid for colour flicker: by inserting a phase difference or scrambling the modulation scheme of the three colours in a well-chosen way, it is possible to reduce the colour-point difference (average of the three main colours) between the three frames and therefore reduce colour flicker.

Another solution to avoid flicker is to also introduce a spatial shift in the modulation scheme. For instance: if there is a LED backlight or CCFL backlight with multiple elements that emit light, then it is possible to drive in frame one some part of the display area with (local) backlight luminance value L1, and drive other parts of the backlight with respective luminance values L2 and L3. For example: a backlight with LEDs organized in stripes and a two-frame two-level dither scheme: one could drive in frame one the upper part of the display with local backlight value L1 and the lower part of display with local backlight value L2 and in the second frame one would then drive the upper part of the display with local backlight value L2 and the lower part of the display with local backlight value L1. This will cause the average luminance over the complete display are to be constant over all frames.

Another possible problem with embodiments of the present invention could be the existence of motion artefacts due to the multi-frame dither block. Indeed: if moving objects are shown on the display system then it is possible that flicker and motion artefacts are created because the actual image to be displayed changes in the middle of a "period" of the dither algorithm (temporal moiré artefacts between backlight and LCD pixel data). Suppose a three-frame two-level dither scheme is used and a moving line is to be shown on the display. In that case the luminance value of the line will be dependent on the position because of the movement. Of course this is an artefact that is easy to see. There are a few solutions for this problem: a first simple solution is to avoid any movement (changes of image to be displayed) during the frame period of the dither scheme. In other words: suppose that a three-frame two-level dither scheme is used, then the image to be displayed on the display should only change once in three frames.

In that way there will be no motion artefacts present because the image is stable during the period of the dither scheme. Note that this can be achieved by lowering the actual frame rate going to the display system or by internally increasing the frame rate going to the panel itself (a compromise between these two is also possible). For example: it would be not a problem to have an external frame rate of 50 Hz to the display system and an internal frame rate towards the LC panel of 150 Hz (in case of a three-frame two-level dither scheme). A second solution to avoid motion artefacts is more complex. One could take into account the movement of the object and therefore really adapt the pixel data sent to the display to make sure that the average luminance value (over the period of the dither scheme) and/or colour point of each pixel is as much as possible (at least remove peaks) correct for each location on the display. Of course this is a more complex calculation, but it allows the actual frame rate to be kept high.

In case of for instance a projection system where the observed luminance and/or colour point is not the luminance and/or colour point of the light that is created by the display system, it is useful to really use the luminance and/or colour point that is observed by the user in the calculations to determine the best dither scheme. For instance: a projection system that projects an image on a wall with spatial differences in reflectivity and also colour differences over area of the wall. It is then preferred that the two-level dither scheme adapts its frame luminance and colour points of the backlight and also the pixel data that will be sent to the panel, based on the knowledge that the wall will add a luminance and/or colour error to the projected image.

A remarkable application of the two-level dither scheme is to improve spatial colour-uniformity on greyscale and/or colour display systems. Suppose there is a greyscale LCD system and there is spatial colour non-uniformity over the display area. For example take a grey scale display for which the upper part of the display has a higher x-coordinate (colour coordinate) than the lower part of the display. Then it is possible to correct for this spatial colour non-uniformity by: creating a two-level dither scheme with two frames, where the first frame has a backlight colour point that is somewhat lower in x-coordinate compared to the original colour point of the display system without two-level dither, and the second frame has a backlight colour point that is somewhat higher in x-coordinate compared to the original colour point of the display system without two-level dither. If the pixels in the lower part (that has "correct" x-coordinate) are driven equally in frame one and frame two then the colour point of those pixels will still be correct. The pixels in the upper part of the display however (where the x-coordinate is somewhat too high) are driven with a higher pixel value in the first frame and a lower pixel value in the second frame, which will correct for the spatial colour non-uniformity in the greyscale display system. Note that this is example is not intended to be limiting; it is just given for clarity. The principle is that by providing frames where the backlight colour and/or luminance is modulated and at the same time the pixel data is modulated, it is possible to improve colour non-uniformity on greyscale display systems. Note that the same principle can be applied to reduce colour non-uniformity on colour display systems. In that case there are even more degrees of freedom so it is easier to find an optimal solution. Note that there are of course border conditions because the luminance value needs to be correct also. But this is a simple mathematical problem that can be solved even by just checking all possible combinations of backlight luminance and colour point values for the individual frames and combining this with pixel data to be send to the display and information on colour non-uniformities on the display area.
As has been described above, a display 10 has a non pixel addressable backlight 130, a pixel addressable LCD 120 in an optical path, both have temporal modulations applied, of sufficient frequency that the apparent luminance or colour of a pixel will depend on an average output. The apparent luminance or colour of the pixels can be made to take intermediate values between the gradations dictated by the stepsize corresponding to a least significant bit of the pixel addressable part, to enable more accurate reproduction of both colour and greyscale images. Additional intermediate output levels are concentrated at low illumination levels. A convertor generates a temporal modulation of the pixels for the LCD according to a value of the pixels in an input signal, and synchronized to the temporal modulation of the backlight. Other variations within the claims can be conceived.

## Claims

1. A display having a backlight or non-pixel addressable light output part and a pixel addressable light output part in an optical path, the backlight or non-pixel addressable part being arranged to have a temporal modulation, and the pixel addressable part being arranged to provide a set of optical values for each pixel of the display, wherein the set of optical values is increased by the provision of intermediate optical values within the set by driving each pixel as a temporal sequence of output values, different values of the temporal sequence coinciding with different output levels of the modulated backlight or non-pixel addressable part, so that a perceivable optical output is a combination of the outputs of the two parts averaged over a duration of the temporal sequence.

2. The display of claim 1, the backlight or non-pixel-addressable part comprising a controllable light source, and the pixel-addressable part being a reflective or transmissive part.

3. The display of claim 1 or 2, the backlight or non-pixel-addressable part having a transmissive layer.

4. The display of any preceding claim, having a convertor (40) arranged to generate the temporal sequence for the pixel-addressable part for each pixel according to a value for the pixels derived from an input signal, and synchronized to the temporal modulation of the non-pixel-addressable part.

5. The display of any preceding claim, arranged to modulate a colour point of the output of the backlight or non-pixel-addressable part.

6. The display of any preceding claim, being a colour sequential type, having a series of fields and the temporal sequence being applied for each field of the colour sequence.

7. The display of any preceding claim, having a sensor (200) to monitor a luminance or colour of the display, and dynamically alter the modulation or the temporal sequence according to the monitoring.

8. The display of any preceding claim, arranged to apply a spatial variation using the backlight or non-pixel-addressable part or the pixel-addressable part.

9. The display of any preceding claim depending on claim 4, the temporal modulation or the values of the sequence being arranged to remain within a limit on transition rate.

10. The display of any preceding claim depending on claim 4, the temporal modulation or the sequence being scrambled.

11. A method of configuring a display having a backlight or non-pixel addressable light output part and a pixel addressable light output part in an optical path, and the pixel addressable part being driven to provide a set of optical values for each pixel of the display, the backlight or non-pixel addressable part being driven by a temporal modulation, wherein the set of optical values is increased by the provision of intermediate optical values within the set by driving the pixel addressable part to provide an optical value for each pixel as a temporal sequence of output values, the driving being such that different values of the temporal sequence coincide with different output levels of the modulated backlight or non-pixel addressable part, the method further comprising: determining the temporal sequence of optical values so that a perceivable output is a combination of the optical outputs of the two parts averaged over a duration of the temporal sequence.

12. The method of claim 11, having the step of measuring the outputs.

13. The method of claim 12 having the step of selecting an output corresponding to a given input value, and storing a series of values used for obtaining the selected output.

14. A convertor for converting an input signal for a display into a first signal for temporal modulation of a backlight or non-pixel addressable part in an optical path of the display, and a second signal for controlling a pixel addressable part in the optical path of the display, the second signal comprising signals for providing a set of optical values for each pixel of the display, the second signal also having a temporal sequence of output values for each pixel of the display such that different optical values of the temporal sequence will coincide with different output levels of the modulated backlight or non-pixel addressable part to thereby provide intermediate optical values of the set by a combination of the optical outputs of the two parts averaged over a duration of the temporal sequence.

15. The convertor of claim 14, the first signal comprising a temporal modulation according to a value for each pixel derived from the input signal, and the convertor being arranged to synchronize the temporal modulations of the first and second signals.
